# EUROPEAN PATENT SPECIFICATION

(11) **EP 1 234 460 B1**
(45) Date of publication and mention of the grant of the patent: **18.03.2009**
(21) Application number: 00983998.6
(22) Date of filing: 07.12.2000
(51) Int. Cl.: H04L 12/28

(54) **FLEXIBLE WIRELESS LAN ARCHITECTURE BASED ON A COMMUNICATION SERVER**
ARCHITEKTUR FÜR EIN FLEXIBLES DRAHTLOSES LAN, BASIEREND AUF EINEN KOMMUNIKATIONSSERVER
ARCHITECTURE DE RESEAU LOCAL SANS FIL FLEXIBLE BASEE SUR UN SERVEUR DE COMMUNICATION

(30) Priority: 08.12.1999 US 457624
(43) Date of publication of application: 28.08.2002
(73) Proprietor: Symbol Technologies, Inc., Holtsville, NY 11742 (US)
(72) Inventor: GRAU, Juan, Redwood City, CA 94061 (US); REYNOLDS, Russell R., Los Gatos, CA 95033 (US); MIM, Reiner, Santa Clara, CA 95051 (US)
(74) Representative: Maiwald Patentanwalts GmbH
(86) International application number: PCT/US2000/033170
(87) International publication number: WO 2001/043467

(56) References cited:
- EP-A- 0 930 766
- WO-A-93/07684
- WO-A-99/37047
- US-A- 5 339 316
- US-A- 5 852 405
- US-A- 5 870 385
- US-A- 5 958 006
- US-A- 5 958 006
- US-A- 5 991 287
- US-A- 6 006 090
- US-A- 6 067 291
- US-A- 6 101 531

## Description

### BACKGROUND OF THE INVENTION

The present invention relates to wireless Local Area Network (LAN) systems. LANs are typically used to interconnect personal computers or workstations within an office. Computers connected to the LAN communicate among each other and to specialized devices such as file servers and printers.

Wired LAN systems can present problems due to wire routing difficulties, installation time and mobility requirements. Wireless LANs have been devised to allow for a wireless interconnection to computer devices and peripherals.

Wireless LAN systems can fully replace or extend a wired LAN. In the latter case, access points are typically used to create the interconnection between the wireless and the wired portion of the LAN. Between the remote devices and access points, radio frequency transmissions are typically used. These transmissions are often done using an unlicensed radio frequency band, such as 2.4 GHz - 2.4835 GHz, 5.15 GHz - 5.35 GHz or 5.725 GHz - 5.825 GHz. Relatively weak transmissions on the unlicensed frequency bands are sufficient to communicate between the remote devices and the access points since the wireless LANs are geographically limited.

Although a single access point can support a relatively large group of remote devices, it functions only within a finite range of typically several hundred feet. Extended coverage areas can be accomplished by installing multiple access points with overlapping coverage cells, so that remote devices can roam throughout the area without ever losing network contact. A typical wireless LAN can use up to hundreds of access points, and thus the cost of the access points can strongly influence the cost of the entire system.

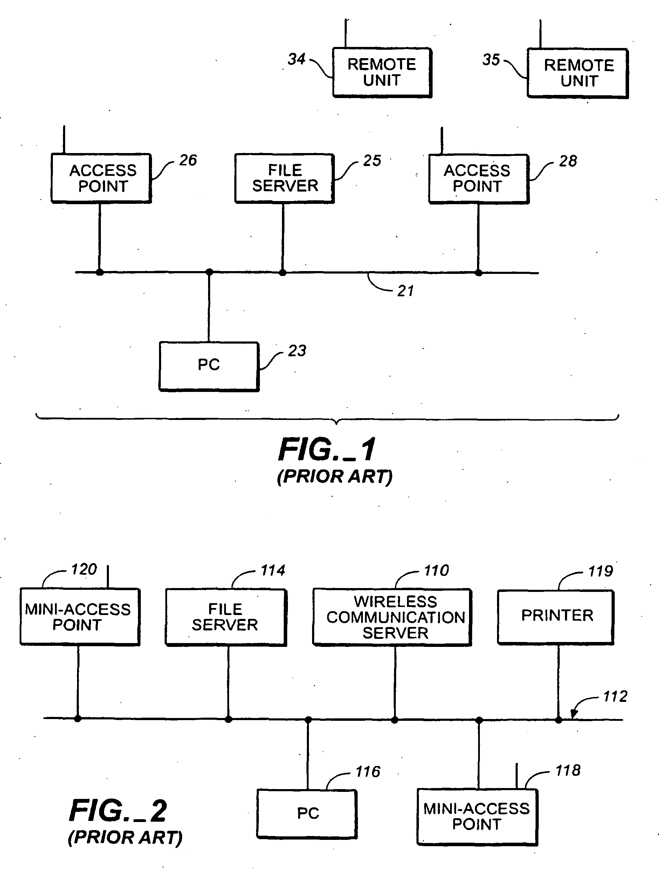

Figure 1 illustrates a prior art system for a wireless LAN using access points. A backbone 21 comprising conventional network elements such as hubs and switches is connected to the access points 26 and 28. Data coming from devices such as file server 25 on the backbone 21 goes to the access points 26 and 28. The correct access point then transmits the data to the desired remote unit 34 or 35. Such a wireless LAN arrangement requires a relatively complex and expensive access point, since many functions are duplicated in ail of the access points.

The European patent application EP 0 930 766 A2 shows for instance in figure 1 of D1, a system for digital radio communication comprising a private branch exchange telephone system (PBX), a terminal (Mu) comprising a first radio, An access point (AP) comprising a second radio, a bridge connecting said PBX and said access point. Communication between the terminal (Mu) and the PBX are established through said first and second radios and said bridge. A transfer of data between the terminal and a remote location is made through the internet using digital data packets and standard internet protocol.

Document WO 99/37047 A1 discloses a wireless data communication system, which includes simplified access points, connected to parts of an intelligent switching hub. The switching hubs relays data packets to the access points in accordance with destination address data in the data communications.

In order to provide transparent connectivity between the computers on the wired LAN and the remote units, an access point processes ail packets on its backbone interface. Access points usually look at the destination address of each data packet, and consult internal tables to determine whether the packet should be received and forwarded out its wireless interface. Data that is not forwarded is, in effect, filtered out. As fast data backbones such as 100Mbit Fast Ethernet become more common, the ability to process and filter data packets at the appropriate wire speed requires a relatively complex access point. This is despite the fact that the access point s effective throughput may remain limited by the slower wireless link connection.

Other operations typically placed in the access points, such as management 20 and security functions, further drive up the memory size and processing power requirements of the access points. Typically, a security table is stored in each access point indicating the remote units which are authorized to transmit data through to the LAN. Since many table entries (and a variety of other data) are typically duplicated on each access point, some of the electronics in the access points is utilized inefficiently, further driving up the total cost of the wireless infrastructure.

The majority of access points on the market today are fixed-configuration single-radio systems. Another type of prior art system is based on modular multislot access points. Multi-slot access points use multiple radio card slots that allow for multiple radio transceivers. The use of more than one radio transceiver can increase the access point's bandwidth or provide increased radio flexibility. In particular, since multi-slot access points are modular, the transceiver units can be upgraded with future technology allowing for higher data rates. Unfortunately different transceiver unit implementations vary widely not only in terms of performance, but also coverage range. To compensate for the significant range loss that usually ensues with a higher data rate transceiver, additional access points need to be installed to avoid coverage holes. In most cases, a completely new site survey will be required to determine the ideal location of both the additional and the existing access points. The other downside of the modular multi-slot access points is that they tend to be bulky and expensive. In many cases, the access points' locations for optimal wireless LAN coverage are in areas that are hard to reach, such as roof rafters. To allow for maintenance of these complex access points, they are typically placed in an easy to reach location and a coaxial antenna cable is used to connect the respective antenna to the access point. This allows the antenna to be placed in the optimal - but hard to access - location while minimizing maintenance concerns. Due to the close proximity of the individual radio transceivers in a multi-slot access point, it may be necessary to install external antennas with additional separation between the antennas to avoid undesired interference effects, even if the access point itself can be positioned in the ideal location. In both cases, expensive, stiff, and relatively uncommon co-axial antenna cable extensions are required.

### SUMMARY OF THE PRESENT INVENTION

The present invention, concerns a wireless LAN system including a wireless communication server and one or more access points operably connected to the wireless communication server. The access points are adapted to wirelessly transmit and receive data to and from remote units using radio frequency communications such that the remote units form part of a wireless LAN. The wireless communication server is physically separate from the access points. The wireless communication server maintains centralized filtering and forwarding of data to be transmitted to the remote units. The wireless communication server further includes one or multiple security tables to provide a centralized security system for the access points. The invention is defined by a wireless Local Area Network according to claim 1 and a method according to claim 12. Other embodiments are provided according to the dependent claims appended hereto.

### BRIEF DESCRIPTION OF THE DRAWINGS

Figure 1 is a diagram of a prior art wireless LAN system.
Figure 2 is a diagram illustrating one embodiment of a wireless communication server and mini-access points connected to a wired LAN backbone.
Figure 3 is a diagram of the wireless LAN system of one embodiment of the present invention.
Figure 4 is a diagram that illustrates the operation of data transfer between the external network and a remote unit in one embodiment of the present invention.
Figure 5 is a diagram of one embodiment of a wireless communication server connected to access points through dedicated connection elements.
Figure 6 is a diagram of one embodiment of a wireless communication server directly connected to access points (built-in hub).
Figure 7 is a diagram illustrating a wireless communication server of one embodiment of the present invention.
Figure 8 is a diagram illustrating a mini-access point of one embodiment of the present invention.
Figure 9 is a diagram illustrating a wireless LAN system of one embodiment of the present invention connected to use multiple wireless communication servers as backup systems or to achieve higher mini-access point densities.

### DETAILED DESCRIPTION OF THE PREFERRED EMBODIMENT

### Overview

One embodiment of the present invention is a wireless LAN architecture where functionality previously provided by a single prior art access point device is divided into two separate devices. The first device is an apparatus with the main purpose to convert the wired medium information into a wireless medium. This device is called an access point (or mini-access point) and it converts information between the wired Ethernet medium and a radio frequency medium, although other wired and wireless media options are possible. The second device performs most of the networking functions, including certain processing-intensive functions commonly placed into access points in prior art wireless LAN systems. In a preferred embodiment of this invention, this device is called a wireless communication server. The core functions of the wireless communication server are the centralized filtering of unnecessary data and the forwarding of the relevant data to the correct mini-access point. Additional functions that can be placed in the wireless communication server include mini-access point management, security, quality of service (QoS), load balancing, and others.

Generally speaking, the wireless communication server centralizes in one device certain common functions found in multiple access points in prior art, freeing one or multiple mini-access points from having to perform these functions. A relatively large number of the mini-access points can be controlled by a single wireless communication server. This way, the hardware and software necessary to perform these functions no longer needs to be duplicated in all the access points of an installation. Consequently, the use of a wireless communication server allows for the mini-access points to be made less complex, less power consumptive, and smaller, significantly reducing the total system cost. The reduced power consumption of the mini-access points makes it possible to supply DC power to the mini-access points remotely over a few of the wires of a data wire bundle. Eliminating the AC power outlet dependency combined with its reduced form factor allows the mini-access point to be positioned at the optimal location for the antenna, removing the need for an additional co-axial antenna extension.

The mini-access point and the wireless communication server are typically physically connected together by an interconnection system comprised of conventional network elements such as hubs, switches, routers, and the like. Some of these elements, such as hubs, can be integrated into the wireless communication server, or alternatively, external network elements can be leveraged. In a preferred embodiment, the wireless communication server can be implemented as a cost-effective single-port solution that connects to a backbone. The mini-access points may also be connected to the backbone, or to the wireless communication server via a dedicated LAN segment. The existing conventional wired network elements provide a two-way communications path between the mini-access points and the wireless communication server and between the wireless communication server and the backbone. The interconnection system can also use a variety of physical media standards such as Ethernet, Fast Ethernet, Asynchronous Transfer Mode (ATM), Fiber Distributed Data Interface (FDDI), Token-Ring, and other present and future local area physical and link layer standards. By leveraging industry-standard interconnection components, installation complexity can be greatly reduced.

The wireless communication server logically communicates with the mini-access points via standard data networking protocols. Information exchanged between the wireless communication server and the mini-access points can be categorized as management information or data information. Management information is information generated at either the wireless communication server or the mini-access point and destined to either the wireless communication server or mini-access points. Data information is information generated elsewhere in the network, passing through the wireless communication server and eventually a mini-access point and destined to devices elsewhere in the network. Data information travelling between the wireless communication server and the mini-access point may, for example, be encapsulated in Transmission Control Protocol/Internet Protocol (TCP/IP) or Sub-Network Access Protocol/ Service Access Point (SNAP/SAP) frames. This alleviates the need for expensive filtering functionality on the mini-access points. Also, using standards-based transport mechanisms allows management or data information to flow through a wide range of standards-based interconnection systems. Once again, this greatly reduces the complexity of the installation process as well as its cost since the interconnection system is usually already in place in many installations or is readily available from a wide range of component suppliers.

In a preferred embodiment, the wireless communication server monitors all the data information passing through the network. If it determines that some of the data is destined to a device on the wireless network, it will receive such data and re-transmit it directly to the most appropriate mini-access point. That mini-access point will then convert the data to the wireless medium and deliver it to the destination device. Data that is not directed to the wireless network is filtered out by the wireless communication server. In a preferred embodiment, the mini-access point is only required to receive data or management information directed to it. It is not required to monitor the wired network for data destined to other devices on the wireless or wired network. On the other hand, data transmitted by a wireless device will be received by the most appropriate mini-access point which will convert the data to the wired medium and direct it to the wireless communication server. Once again, it is not required that the mini-access point examines the data to determine where to send it. In this preferred embodiment, the mini-access point will always send this data to the wireless communication server. The wireless communication server will then receive that data from the mini-access point and forward it to the proper destination.

As stated above, in a preferred embodiment of the present invention the filtering is done in a centralized manner in the wireless communication server. The wireless communication server examines the data on the network for data to be sent to a remote unit. The filtering in the wireless communication server is preferably done based on a remote unit identification. In a preferred embodiment, the layer 2 (data link layer) address of the remote unit is used as the remote unit identification.

The data for the remote unit is forwarded to the correct mini-access point. In one embodiment, the data is encapsulated in a frame that adds the correct mini-access point address to the data. The mini-access point wirelessly transmits the forwarded data to the remote unit without needing to examine the data for a remote unit identification. Although different remote units are associated with the mini-access point at different times, the mini-access point needs only look for the unchanging mini-access point address in the frame encapsulating the data. The filtering function is thus centralized in the wireless communication server rather than at the mini-access points.

Typically, a wireless communication server is first installed by connecting it to the existing LAN infrastructure. Then mini-access points are added by also connecting them to the LAN infrastructure. In a preferred embodiment, the wireless communication server automatically detects the appearance of a mini-access point on the network and takes control over it. However, it is also possible to first deploy mini-access points, and to install the wireless communication server at a later time. Once installed, the wireless communication server can discover mini-access points present on the network and take control over them. In a preferred embodiment, the process of taking control minimally encompasses forcing all or most data traffic to and from the mini-access point to come from the wireless communication server, or to be directed to the wireless communication server. In addition, management information for the mini-access point would come from or go to the wireless communication server.

Multiple wireless communication servers can preferably be operational on a wireless LAN at the same time. In a preferred embodiment, a mechanism exists to allow one wireless communication server to back-up another and to take over in a failure situation.

Another aspect of the wireless communication server is to provide a platform that allows the integration of multiple different wireless media technologies, for example complying with different vendors' wireless media standards, into a unified wireless network. By centralizing most of the networking and management features, it is possible to have mini-access points with different wireless media capabilities attached to a single wireless communication server. For example, there could be one particular area of an installation using applications that require higher data rates. It would then be possible to install higher performance, but more costly mini-access points on an as-needed basis only, and allow these to share a wireless communication server with any existing, legacy performance mini-access points. Other than the data rate differences, in a preferred embodiment the user would see equivalent functionality from the legacy and the high performance mini-access point. This is because most of the intelligence functions reside in the wireless communication server. Such an integration provides a great benefit to network administrators by allowing them to maintain one common look and feel of the wireless network, regardless of the type of mini-access point and wireless media standard used. Furthermore, it makes it easy for users to expand the wireless network with additional mini-access points without requiring special training and lengthy qualification, which is again due to the fact that most of the relevant functionality - from a network administrators perspective - resides in the wireless communication server. Because of these characteristics, the present invention also provides a clean and simple migration path from the wireless media technologies of today to new, potentially more powerful wireless media technologies of tomorrow. The user can simply add mini-access points to those areas where the new technology is desired, while leaving the existing legacy mini-access points in operation and without disrupting the existing wireless network.

Figure 2 is a diagram illustrating a wireless communication server 110, and mini-access points 118 and 120 connected to a wired backbone 112. The LAN backbone 112 may include hubs, switches and the like. Also shown are file server 114, personal computer 116, and printer 119. The wireless communication server 110 and mini-access points, 118 and 120, can be placed anywhere on the wired LAN backbone. The example of Fig. 2 uses a single-port wireless communication server in which the wireless communication server 110 both receives data from the wired infrastructure and sends data to the mini-access points using the same port.

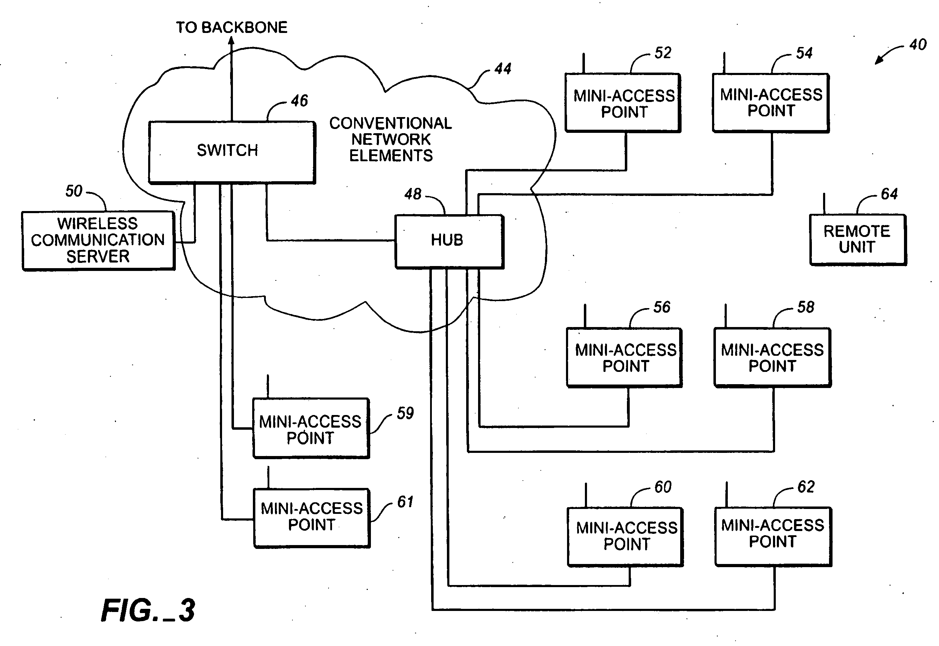

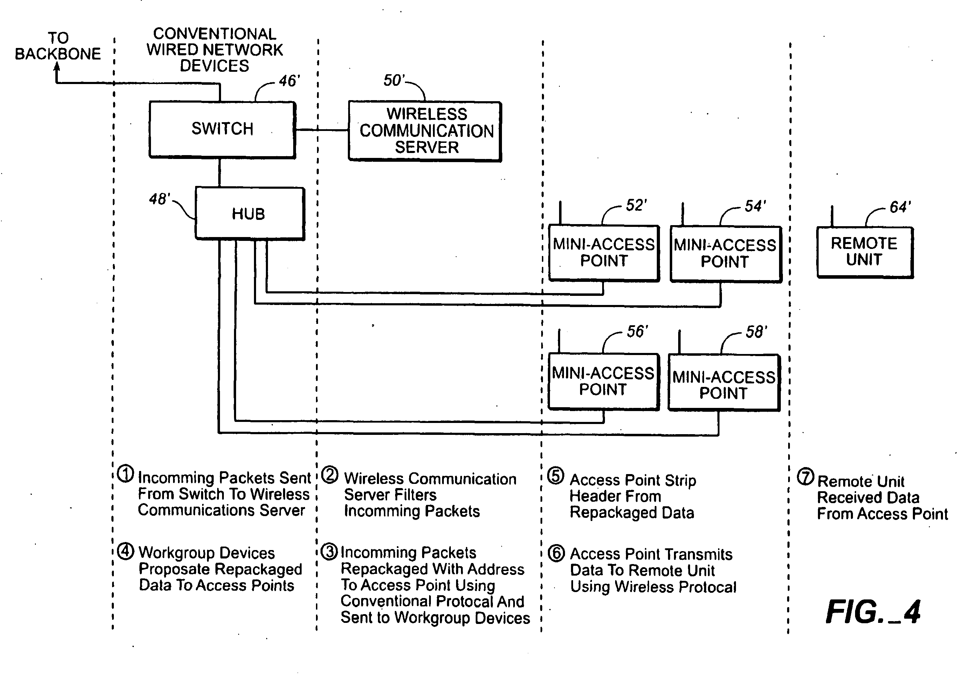

Figure 3 illustrates a wireless LAN system 40 of the present invention. Conventional network elements 44, which in this example include switch 46 and hub 48, connect to a LAN backbone. A variety of conventional wired network elements can be used with the present invention. Typically, these wired network elements are OSI model level 3 or below. The wireless communication server 50 is connected to these conventional network elements 44. Mini-access points 52, 54, 56, 58, 59, 60, 61 and 62 are also connected to the conventional network elements. A remote unit such as remote unit 64 can wirelessly communicate with the mini-access points. As described in Figure 4 below, data from the backbone is sent to the switch 46, which directs all data traffic destined for the remote units to the wireless communication server 50. The wireless communication server 50 uses a destination table to determine which mini-access point the desired remote unit is associated with, and then redirects the data to that mini-access point. In this embodiment, the data is sent from the wireless communication server 50 to the switch 46, hub 48 and the mini-access point. The mini-access point can then transmit the data to the remote unit without requiring a table lookup to determine whether to forward the data. Since the mini-access point does not need to process a table, its complexity is reduced significantly. The wireless communication server 50 preferably also contains the security tables for the system since all the data coming to and from the remote units is sent to the wireless communication server.

One manner of forwarding the data by the wireless communication server is by repackaging the data (frame encapsulation). Alternately, frame translation or any other redirecting method can be used.

The conventional wired network elements 44 allow for great flexibility in connecting a relatively large number of mini-access points to the wireless communication server, as well as for the setting up of additional wireless communication servers.

Note that the system in Figure 3 can be arranged such that the connection to the mini-access point is done at a lower connection speed than the connection to the wireless communication server. This allows for an even less expensive wireless access point.

Figure 4 illustrates a diagram showing an example of the data transfer for one embodiment of the system of Figure 2. Data coming from the backbone is sent to the conventional network devices. The data is sent from the switch 46' to the wireless communication server 50'. The wireless communication server 50' processes the incoming packet. The wireless communication server 50' examines the remote unit address and determines whether to forward or filter the packet. If the packet is to be forwarded, it determines from the remote unit address the correct mini-access point to be sent the data. In one embodiment, the data is repackaged to be transmitted to the mini-access point. The data is sent from the wireless communication server 50' to the switch 46' to the hub 48' and then data is propagated by the hub 48' to all of the mini-access points 52', 54', 56' and 58'. The mini-access points examine the redirected packet data for the mini-access point address. The mini-access point address is fixed for each mini-access point so this check does not require a table look-up. The mini-access point then transmits the data to the remote unit using a conventional wireless protocol. The remote unit 64 receives the data from the mini-access point. Data can be sent back to the backbone by transmitting from the remote unit to the mini-access point, hub 48', switch 46' , to the wireless communication server 50'. If so, the wireless communication server 50' checks to see whether the data should be transmitted to the wired network or to another remote unit. If the data is destined for the wired network, it then transmits the data to the switch 46', and from there to the backbone. If the data is destined to a remote unit, it repackages the data and sends it to the appropriate mini-access point.

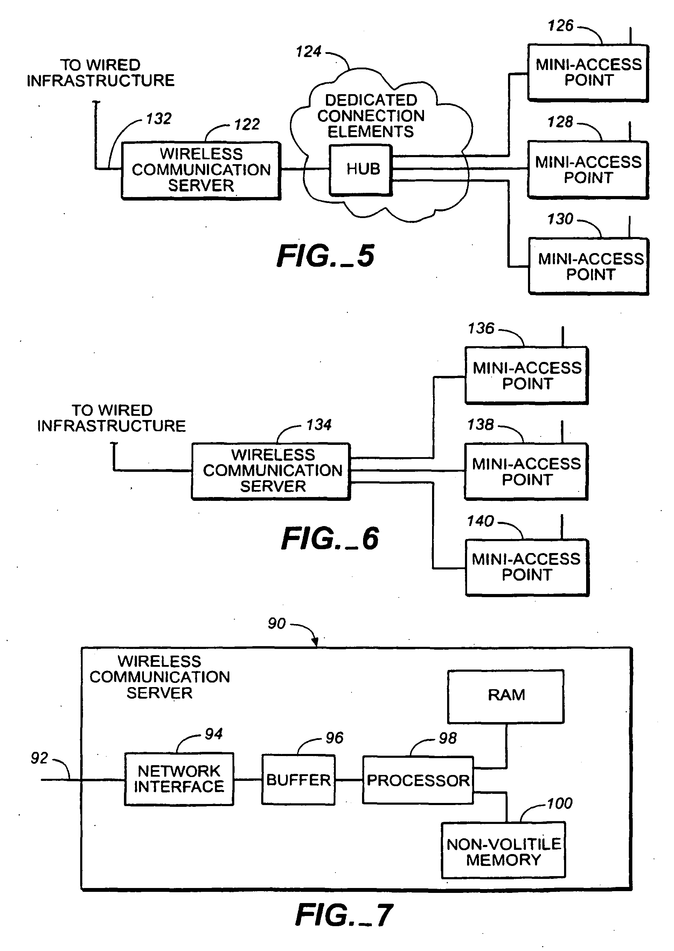

Figure 5 is a diagram of a wireless communication server 122 connected by using dedicated connection elements 124 to mini-access points 126, 128 and 130. The wireless communication server 122 is connected to the wired infrastructure along line 132. The dedicated connection elements 124 may be conventional connection elements including switches, hubs and the like or they can be specially designed connecting units. The example of Fig. 5 uses a two-port wireless communication server in which data is received from a wired infrastructure using one port and data sent to the mini-access points using another port.

Figure 6 is a diagram of a wireless communication server 134 directly connected to mini-access points 136, 138 and 140. The wireless communication server 134 is a multi-port wireless communication server in which more than one port is used to connect to the mini-access points. The wireless communication server 134 has an internal, built-in hub or switch that allows this multiple port connection system.

One advantage of the system of Figs. 5 and 6 is, that in those systems the wireless communication server can supply power to the mini-access points using otherwise unused wires in the data wire bundle between the wireless communication server and the mini-access points. This arrangement helps in positioning the mini-access point to create optimum wireless coverage independent of the availability of AC power sockets.

Figure 7 illustrates a diagram of one embodiment of a wireless communication server 90 for use with the present invention. Port 92 is connected to a network interface 94. Network interface 94 loads data into and from buffer 96. The processor 98 uses instructions stored in memory 100 to control the packet processing operations. The memory 100 stores the functional library code for doing the core functions (filtering and data redirecting) as well as any optional implemented functions (security, QoS, load balancing, access point management). The optional network management interface code allows for user control and configuration of the wireless communication server using a Web server, Simple Network Management Protocol (SNMP), a serial controller protocol or other protocol. A system state memory section in memory 100 stores the required network state information, such as destination tables, authorization and security tables and the like.

The wireless communication server of Figure 7 shows a single network port 92. A multi-port wireless communication server can be produced by adding a built-in hub to the wireless communication server.

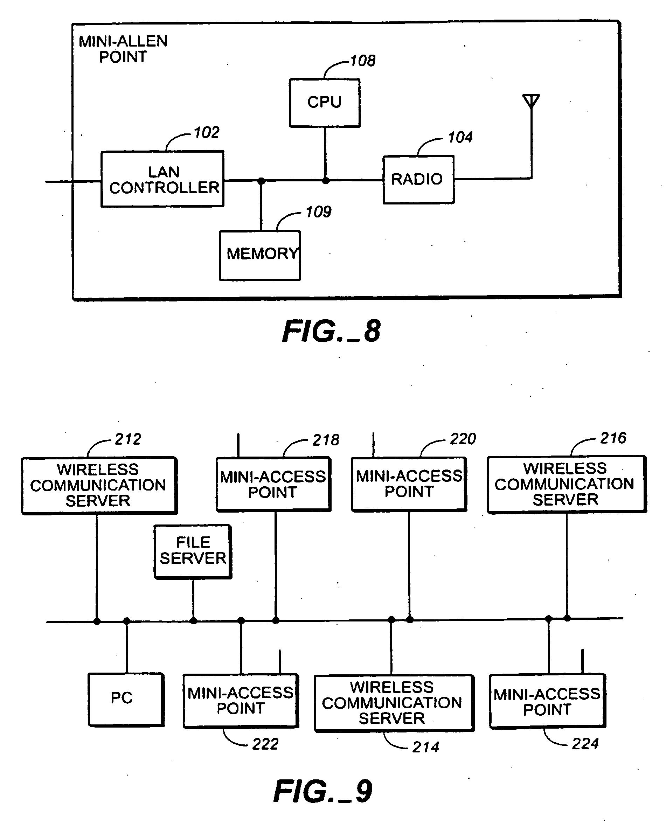

Figure 8 illustrates a diagram of one embodiment of a mini-access point of the present invention. A LAN controller 102 is connected to a radio 104, central processing unit (CPU) 108, and memory 109. A relatively inexpensive CPU 108 connected to a relatively small memory 109 can do the reduced functions of the mini-access point. These functions can include checking the data packets to see if the data packet addresses the mini-access point for transmission; the wireless communication server auto-detect function and the reduced-function stand-alone operation. The CPU need not be able to do the computationally intense filtering operations using a destination table that stores which remote units are associated with the mini-access point.

One important advantage of the system of Figs. 7 and 8 is, that in a preferred embodiment the wireless communication server can support a mix of mini-access points with different types of radios 104. Since the mini-access point controls the wireless protocol, the wireless communication server can be flexible enough to allow future upgrades of the wireless infrastructure to higher data rate radio technology. Furthermore, the flexibility provided by the conventional interconnection system allows to create a new high data rate capable infrastructure in a design specifically suited to the range of the high data rate transceiver units and antennas. Figure 9 illustrates a wireless LAN of the present invention using multiple wireless communication servers 212, 214, and 216. These wireless communication servers can receive duplicate data from the system such that each wireless communication server stores the destination and security tables for the entire system. Each wireless communication server is responsible far a subset of the mini-access points. For example, wireless communication server 212 is responsible for mini-access points 218 and 220 and wireless communication server 214 is responsible for mini-access points 222 and 224. If one of the wireless communication servers such as wireless communication server 214 fails, another wireless communication server, such as wireless communication server 212 can take over responsibility for the transmitting of data to and from the mini-access points 222 and 224. The arrangement of Figure 9 with multiple wireless communication servers connected into the conventional network allows for an easy duplication of the functions of the wireless communication server. By using a backup wireless communication server, the reliability of the entire system is improved.

The conventional wire protocol can be Ethernet, Fast Ethernet, Gigabit Ethernet, Token Ring, ATM or any other conventional network protocol including other IEEE 802 standards. The wired network can also use converters which can convert the wired protocol during signalling between the wired communication server and the mini-access point. The presently disclosed embodiments are therefore considered in ail respects to be illustrative and not restrictive. The scope of the invention is illustrated by the appended claims rather than the foregoing description, and all changes which come within the meaning and range for equivalence thereof are intended to be embraced herein.

## Claims

1. A wireless Local Area Network system, comprising:
a wireless communication server (50, 50', 90, 110,122, 134, 212, 214, 216); and
one or more access points (52, 54, 56, 58-62,52', 54', 56', 58", 118, 120, 126, 128, 130, 136, 138, 140, 218, 220, 222, 224) operably connected to the wireless communication server (50, 50', 90, 110,122, 134, 212, 214, 216), the access points adapted to wirelessly transmit and receive data to and from remote units (64, 64') using a radio frequency communication such that the remote units form part of a wireless Local Area Network (40);
wherein the wireless communication server is physically separate from the access points, the wireless communication server adapted to maintain centralized filtering by analysing network data to determine from a remote unit identification a desired access point to transmit the data, adapted to select the desired access point from the number of possible access points and adapted to forward data to the desired access point to be transmitted to the remote units; wherein the one or more access points are operable such that they need not examine the remote unit identification to determine whether to transmit the data **characterized in that**
the wireless communication server includes one or multiple security tables to provide a centralized security system for the access points.

2. The wireless Local Area Network system of claim 1, wherein the wireless communication server (50, 50', 90, 110,122, 134, 212, 214, 216) has a built-in interconnection unit to allow for multiple ports to connect to the multiple access points (52, 54, 56, 58-62,52', 54', 56', 58", 118; 120, 126, 128, 130, 136, 138, 140, 218, 220, 222, 224).

3. The wireless Local Area Network system of claim 1, wherein the wireless communication server (50, 50', 90, 110,122, 134, 212, 214, 216) acts as a centralized management system for the access points (52, 54, 56, 58-62,52', 54', 56', 58", 118,120,126, 128, 130, 136, 138, 140, 218, 220, 222, 224).

4. The wireless Local Area Network system of claim 1, wherein the wireless communication server (50, 50', 90, 110,122, 134, 212, 214, 216) includes at least one destination table relating remote units (64, 64') to access points (52, 54, 56, 58-62,52', 54', 56', 58", 118, 120, 126, 128, 130, 136, 138, 140, 218, 220, 222, 224).

5. The wireless Local Area Network system of claim 4, wherein a centralized management system is adapted to maintain the destination table or tables.

6. The wireless Local Area Network system of claim 1, wherein the wireless communication server (50, 50', 90, 110,122, 134, 212, 214, 216) is adapted to forward data to the access points (52, 54, 56, 58-62,52', 54', 56', 58", 118, 120, 126, 128, 130, 136, 138, 140, 218, 220, 222, 224) using frame translation or encapsulation.

7. The wireless Local Area Network system of claim 1, wherein the access points (52, 54, 56, 58-62,52', 54', 56', 58", 118,120, 126, 128, 130, 136, 138, 140, 218, 220, 222, 224) are powered by the wireless communication server (50, 50', 90, 110,122, 134, 212, 214, 216) or a dedicated device such as a power hub through at least two wires in a data-wire bundle.

8. The wireless Local Area Network system of claim 1, wherein the wireless communication server (50, 50', 90, 110,122, 134, 212, 214, 216) has a single data transfer port adapted to connect the wireless communication server to at least one network element.

9. The wireless Local Area Network system of claim 1, wherein at least one network element provides a path adapted to exclude the wireless communication server (50, 50', 90, 110,122, 134, 212, 214, 216) between the external network and the access point (52, 54, 56, 58-62,52', 54', 56', 58", 118, 120, 126,128, 130, 136, 138, 140,218, 220,222, 224).

10. The wireless Local Area Network system of claim 1, wherein the wireless communication server (50, 50', 90, 110,122, 134, 212, 214, 216) is adapted to filter network data based on a remote unit identification.

11. The wireless Local Area Network system of claim 10, wherein the remote unit identification is a level 2 layer address of the remote unit (64, 64').

12. A method of directing data to a remote unit in a wireless Local Area Network using access points (52, 54, 56, 58-62,52', 54', 56', 58", 118, 120, 126, 128, 130, 136, 138, 140, 218, 220, 222, 224) and remote units (64, 64'), comprising:
in a wireless communication server (50, 50', 90, 110,122, 134, 212, 214, 216) which is physically separate from the access point (52, 54, 56, 58-62,52', 54', 56', 58", 118, 120,126, 128, 130, 136, 138, 140, 218, 220, 222, 224), analyzing network data to determine, from a remote unit identification, a desired access point to transmit the data and selecting the desired access point from a number of possible access points in the wireless communication server;
in the wireless communication server (50, 50', 90, 110,122, 134, 212, 214, 216), forwarding the data to the correct access point;
in an access point (52, 54, 56, 58-62,52', 54', 56', 58", 118, 120, 126, 128, 130, 136, 138,140, 218, 220, 222, 224), wirelessly transmitting the data to the remote unit (64, 64') using a radio frequency communication link, wherein the network data is filtered by the wireless communication server, whereby the access point needs not to examine the remote unit identification to determine whether to transmit the data; **characterized in that**
providing a centralized security system for the access points in the wireless communication server including one or more security tables.

13. The method of claim 12 further comprising, in the access point (52, 54, 56, 58-62,52', 54', 56', 58", 118, 120, 126, 128, 130, 136, 138, 140, 218, 220, 222, 224), sensing whether a wireless communication server (50, 50', 90, 110,122, 134, 212, 214, 216) is associated with the network.

14. The method of claim 12 further comprising, in the wireless communication server (50, 50',90, 110,122, 134, 212, 214, 216), sensing whether an access point (52, 54, 56, 58-62,52', 54', 56', 58", 118, 120, 126, 128, 130, 136, 138, 140, 218, 220, 222, 224) is associated with the network.

15. The method of claim 12 wherein the wireless communication server (50, 50', 90, 110,122, 134, 212, 214, 216) uses a destination table to associate a remote unit (64, 64') with an access point (52, 54, 56, 58-62,52', 54', 56', 58", 118, 120, 126, 128, 130, 136, 138, 140, 218, 220, 222, 224).

16. The method of claim 12 wherein the forwarding step comprises frame translation or encapsulation.

## Patentansprüche

1. Drahtloses LAN-System, aufweisend:
einen drahtlosen Kommunikationsserver (50, 50', 90, 110, 122, 134, 212, 214, 216) und einen oder mehrere Zugangspunkte (52, 54, 56, 58-62, 52', 54', 56', 58", 118, 120, 126, 128, 130, 136, 138, 140, 218, 220, 222, 224), die in Wirkbeziehung mit dem drahtlosen Kommunikationsserver (50, 50', 90, 110, 122, 134, 212, 214, 216) verbunden sind, wobei die Zugangspunkte eingerichtet sind, durch eine Hochfrequenzkommunikationsverbindung Daten zu entfernten Geräte (64, 64') zu senden und von diesen zu empfangen, wodurch die entfernten Geräte Teil eines drahtlosen LAN-Systems (40) werden;
wobei der drahtlose Kommunikationsserver von den Zugangspunkten physikalisch getrennt ist, wobei der drahtlose Kommunikationsserver eingerichtet ist, durch Analyse der Netzdaten eine zentrale Filterung durchzuführen, um anhand einer Kennung der entfernten Geräte einen gewünschten Zugangspunkt zum Senden der Daten zu bestimmen, eingerichtet ist, den gewünschten Zugangspunkt aus der Anzahl möglicher Zugangspunkte auszuwählen, und eingerichtet ist, an die entfernten Geräte zu sendende Daten an den gewünschten Zugangspunkt weiterzuleiten; wobei der oder die Zugangspunkt(e) eingerichtet sind, ohne dass es notwendig ist, die Kennung der entfernten Geräte zu prüfen, zu bestimmen, ob die Daten zu senden sind, **dadurch gekennzeichnet, dass** der drahtlose Kommunikationsserver eine oder mehrere Sicherheitstabellen aufweist, um ein zentrales Sicherheitssystem für die Zugangspunkte bereitzustellen.

2. Drahtloses LAN-System nach Anspruch 1, wobei der drahtlose Kommunikationsserver (50, 50', 90, 110, 122, 134, 212, 214, 216) ein eingebautes Verbindungsgerät aufweist, um mehrfachen Anschlüssen die Verbindung zu den mehrfachen Zugangspunkten (52, 54, 56, 58-62, 52', 54', 56', 58", 118, 120, 126, 128, 130, 136, 138, 140, 218, 220, 222, 224) zu erlauben.

3. Drahtloses LAN-System nach Anspruch 1, wobei der drahtlose Kommunikationsserver (50, 50', 90, 110, 122, 134, 212, 214, 216) als zentrales Verwaltungssystem für die Zugangspunkte (52, 54, 56, 58-62, 52', 54', 56', 58", 118, 120, 126, 128, 130, 136, 138, 140, 218, 220, 222, 224) dient.

4. Drahtloses LAN-System nach Anspruch 1, wobei der drahtlose Kommunikationsserver (50, 50', 90, 110, 122, 134, 212, 214, 216) mindestens eine Zieltabelle aufweist, die entfernte Geräte (63, 64') mit Zugangspunkten (52, 54, 56, 58-62, 52', 54', 56', 58", 118, 120, 126, 128, 130, 136, 138, 140, 218, 220, 222, 224) in Beziehung bringt.

5. Drahtloses LAN-System nach Anspruch 4, wobei ein zentrales Verwaltungssystem eingerichtet ist, die Zieltabelle(n) zu verwalten.

6. Drahtloses LAN-System nach Anspruch 1, wobei der drahtlose Kommunikationsserver (50, 50', 90, 110, 122, 134, 212, 214, 216) eingerichtet ist, durch Frame Translation oder Einkapselung Daten an die Zugangspunkte (52, 54, 56, 58-62, 52', 54', 56', 58", 118, 120, 126, 128, 130, 136, 138, 140, 218, 220, 222, 224) weiterzuleiten.

7. Drahtloses LAN-System nach Anspruch 1, wobei die Zugangspunkte (52, 54, 56, 58-62, 52', 54', 56', 58", 118, 120, 126, 128, 130, 136, 138, 140, 218, 220, 222, 224) vom drahtlosen Kommunikationsserver (50, 50', 90, 110, 122, 134, 212, 214, 216) oder von einem dedizierten Gerät wie z.B. einem Power Hub durch mindestens zwei Drähte in einem Datendrahtbündel mit Energie versorgt werden.

8. Drahtloses LAN-System nach Anspruch 1, wobei der drahtlose Kommunikationsserver (50, 50', 90, 110, 122, 134, 212, 214, 216) einen einzelnen Datenübertragungsanschluss aufweist, der eingerichtet ist, den drahtlosen Kommunikationsserver mit mindestens einem Netzwerkelement zu verbinden.

9. Drahtloses LAN-System nach Anspruch 1, wobei das mindestens eine Netzwerkelement einen Weg bereitstellt, der eingerichtet ist, den drahtlosen Kommunikationsserver (50, 50', 90, 110, 122, 134, 212, 214, 216) zwischen dem externen Netz und dem Zugangspunkt (52, 54, 56, 58-62, 52', 54', 56', 58", 118, 120, 126, 128, 130, 136, 138, 140, 218, 220, 222, 224) auszuschließen.

10. Drahtloses LAN-System nach Anspruch 1, wobei der drahtlose Kommunikationsserver (50, 50', 90, 110, 122, 134, 212, 214, 216) eingerichtet ist, Netzwerkdaten auf der Basis einer Kennung der entfernten Geräte zu filtern.

11. Drahtloses LAN-System nach Anspruch 10, wobei die Kennung der entfernten Geräte eine Level 2 Layer-Adresse des Ferngeräts (64, 64') ist.

12. Verfahren zum Leiten von Daten zu einem Ferngerät in einem drahtlosen LAN unter Verwendung von Zugangspunkten (52, 54, 56, 58-62, 52', 54', 56', 58", 118, 120, 126, 128, 130, 136, 138, 140, 218, 220, 222, 224) und entfernten Geräte (64, 64'), aufweisend:
in einem drahtlosen Kommunikationsserver (50, 50', 90, 110, 122, 134, 212, 214, 216), der vom Zugangspunkt (52, 54, 56, 58-62, 52', 54', 56', 58", 118, 120, 126, 128, 130, 136, 138, 140, 218, 220, 222, 224) physikalisch getrennt ist, Analysieren von Netzdaten, um anhand einer Kennung der entfernten Geräte einen gewünschten Zugangspunkt zum Senden der Daten zu bestimmen und den gewünschten Zugangspunkt aus einer Anzahl von möglichen Zugangspunkten im drahtlosen Kommunikationsserver auszuwählen;
im drahtlosen Kommunikationsserver (50, 50', 90, 110, 122, 134, 212, 214, 216), das Weiterleiten der Daten an den richtigen Zugangspunkt;
in einem Zugangspunkt (52, 54, 56, 58-62, 52', 54', 56', 58", 118, 120, 126, 128, 130, 136, 138, 140, 218, 220, 222, 224), drahtloses Übertragen der Daten an das Ferngerät (64, 64') über eine Hochfrequenzkommunikationsverbindung, wobei die Netzdaten vom drahtlosen Kommunikationsserver gefiltert werden, wodurch es für die Zugangspunkte nicht erforderlich ist, die Kennung der entfernten Geräte zu prüfen, um zu bestimmen, ob die Daten zu übertragen sind, **gekennzeichnet durch**
das Vorsehen eines zentralen Sicherheitssystems für die Zugangspunkte im drahtlosen Kommunikationsserver, das eine oder mehrere Sicherheitstabelle(n) aufweist.

13. Verfahren nach Anspruch 12, weiterhin aufweisend, im Zugangspunkt (52, 54, 56, 58-62, 52', 54', 56', 58", 118, 120, 126, 128, 130, 136, 138, 140, 218, 220, 222, 224), ermitteln, ob dem Netz ein drahtloser Kommunikationsserver (50, 50', 90, 110, 122, 134, 212, 214, 216) zugeordnet ist.

14. Verfahren nach Anspruch 12, weiterhin aufweisend, im drahtlosen Kommunikationsserver (50, 50', 90, 110, 122, 134, 212, 214, 216), ermitteln, ob dem Netz ein Zugangspunkt (52, 54, 56, 58-62, 52', 54', 56', 58", 118, 120, 126, 128, 130, 136, 138, 140, 218, 220, 222, 224) zugeordnet ist.

15. Verfahren nach Anspruch 12, wobei der drahtlose Kommunikationsserver (50, 50', 90, 110, 122, 134, 212, 214, 216) eine Zieltabelle verwendet, um ein Ferngerät (64, 64') einem Zugangspunkt (52, 54, 56, 58-62, 52', 54', 56', 58", 118, 120, 126, 128, 130, 136, 138, 140, 218, 220, 222, 224) zuzuordnen.

16. Verfahren nach Anspruch 12, wobei der Weiterleitungsschritt Frame-Translation oder Einkapselung aufweist.

## Revendications

1. Système de réseau local sans fil, comportant :
un serveur de communication sans fil (50, 50', 90, 110, 122, 134, 212, 214, 216), et
un ou plusieurs points d'accès (52, 54, 56, 58-62, 52', 54', 56', 58", 118, 120, 126, 128, 130, 136, 138, 140, 218, 220, 222, 224) connectés de manière opérationnelle au serveur de communication sans fil (50, 50', 90, 110, 122, 134, 212, 214, 216), les points d'accès étant adaptés pour transmettre de manière sans fil des données à des unités distantes (64, 64') et recevoir de manière sans fil des données en provenance de celles-ci en utilisant une communication par radiofréquence de sorte que les unités distantes font partie d'un réseau local sans fil (40),
dans lequel le serveur de communication sans fil est physiquement séparé des points d'accès, le serveur de communication sans fil étant adapté pour actualiser un filtrage centralisé en analysant des données de réseau afin de déterminer, à partir d'une identification d'unité distante, un point d'accès voulu pour transmettre les données, adapté pour sélectionner le point d'accès voulu parmi le nombre de points d'accès possibles et adapté pour transférer des données à transmettre aux unités distantes au point d'accès voulu, le ou les points d'accès étant opérationnels de telle sorte qu'il ne soit pas nécessaire d'examiner l'identification d'unité distante pour déterminer s'il faut transmettre les données,
**caractérisé en ce que** le serveur de communication sans fil inclut un ou plusieurs tableaux de sécurité pour fournir un système de sécurité centralisé pour les points d'accès.

2. Système de réseau local sans fil selon la revendication 1, dans lequel le serveur de communication sans fil (50, 50', 90, 110, 122, 134, 212, 214, 216) a une unité d'interconnexion intégrée pour permettre à de multiples ports de se connecter aux multiples points d'accès (52, 54, 56, 58-62, 52', 54', 56', 58", 118, 120, 126, 128, 130,136,138,140,218,220,222,224).

3. Système de réseau local sans fil selon la revendication 1, dans lequel le serveur de communication sans fil (50, 50', 90, 110, 122, 134, 212, 214, 216) agit en tant que système de gestion centralisé pour les points d'accès (52, 54, 56, 58-62, 52', 54', 56', 58", 118, 120, 126, 128, 130, 136, 138, 140, 218, 220, 222, 224).

4. Système de réseau local sans fil selon la revendication 1, dans lequel le serveur de communication sans fil (50, 50', 90, 110, 122, 134, 212, 214, 216) inclut au moins un tableau de destinations reliant des unités distantes (64, 64') à des points d'accès (52, 54, 56, 58-62, 52', 54', 56', 58", 118, 120, 126, 128, 130, 136, 138, 140, 218, 220,222,224).

5. Système de réseau local sans fil selon la revendication 4, dans lequel un système de gestion centralisé est adapté pour actualiser le tableau ou les tableaux de destination.

6. Système de réseau local sans fil selon la revendication 1, dans lequel le serveur de communication sans fil (50, 50', 90, 110, 122, 134, 212, 214, 216) est adapté pour envoyer des données aux points d'accès (52, 54, 56, 58-62, 52', 54', 56', 58", 118, 120, 126, 128, 130, 136, 138, 140, 218, 220, 222, 224) en utilisant une transposition ou une encapsulation de trame.

7. Système de réseau local sans fil selon la revendication 1, dans lequel les points d'accès (52, 54, 56, 58-62, 52', 54', 56', 58", 118, 120, 126, 128, 130, 136, 138, 140, 218, 220, 222, 224) sont alimentés par le serveur de communication sans fil (50, 50', 90, 110, 122, 134, 212, 214, 216) ou un dispositif dédié tel qu'un concentrateur de puissance via au moins deux fils dans un ensemble de fils de données.

8. Système de réseau local sans fil selon la revendication 1, dans lequel le serveur de communication sans fil (50, 50', 90, 110, 122, 134, 212, 214, 216) a un port de transfert de données unique adapté pour connecter le serveur de communication sans fil (50, 50', 90, 110, 122, 134, 212, 214, 216) à au moins un élément de réseau.

9. Système de réseau local sans fil selon la revendication 1, dans lequel au moins un élément de réseau fournit un trajet adapté pour exclure le serveur de communication sans fil (50, 50', 90, 110, 122, 134, 212, 214, 216) entre le réseau externe et le point d'accès (52, 54, 56, 58-62, 52', 54', 56', 58", 118, 120, 126, 128, 130, 136, 138, 140, 218, 220, 222, 224).

10. Système de réseau local sans fil selon la revendication 1, dans lequel le serveur de communication sans fil (50, 50', 90, 110, 122, 134, 212, 214, 216) est adapté pour filtrer des données de réseau sur la base d'une identification d'unité distante.

11. Système de réseau local sans fil selon la revendication 10, dans lequel l'identification d'unité distante est une adresse de couche de niveau 2 de l'unité distante (64, 64').

12. Procédé consistant à diriger des données vers une unité distante dans un réseau local sans fil en utilisant des points d'accès (52, 54, 56, 58-62, 52', 54', 56', 58", 118, 120, 126, 128, 130, 136, 138, 140, 218, 220, 222, 224) et des unités distantes (64, 64'), comportant les étapes consistant à :
dans un serveur de communication sans fil (50, 50', 90, 110, 122, 134, 212, 214, 216) qui est physiquement séparé du point d'accès (52, 54, 56, 58-62, 52', 54', 56', 58", 118, 120, 126, 128, 130, 136, 138, 140, 218, 220, 222, 224), analyser des données de réseau pour déterminer, à partir d'une identification d'unité distante, un point d'accès voulu pour transmettre les données et sélectionner le point d'accès voulu parmi un nombre de points d'accès possibles dans le serveur de communication sans fil,
dans le serveur de communication sans fil (50, 50', 90, 110, 122, 134, 212, 214, 216), envoyer les données au point d'accès correct,
dans un point d'accès (52, 54, 56, 58-62, 52', 54', 56', 58", 118, 120, 126, 128, 130, 136, 138, 140, 218, 220, 222, 224), transmettre de manière sans fil les données à l'unité distante (64, 64') en utilisant une liaison de communication par radiofréquence, les données de réseau étant filtrées par le serveur de communication sans fil, de sorte que le point d'accès n'a pas besoin d'examiner l'identification d'unité distante pour déterminer s'il faut transmettre les données,
**caractérisé en ce qu'**il comporte l'étape consistant à fournir un système de sécurité centralisé pour les points d'accès dans le serveur de communication sans fil incluant un ou plusieurs tableaux de sécurité.

13. Procédé selon la revendication 12 comportant en outre, dans le point d'accès (52, 54, 56, 58-62, 52', 54', 56', 58", 118, 120, 126, 128, 130, 136, 138, 140, 218, 220, 222, 224), l'étape consistant à détecter si un serveur de communication sans fil (50, 50', 90, 110, 122, 134, 212, 214, 216) est associé au réseau.

14. Procédé selon la revendication 12 comportant en outre, dans le serveur de communication sans fil (50, 50', 90, 110, 122, 134, 212, 214, 216), l'étape consistant à détecter si un point d'accès (52, 54, 56, 58-62, 52', 54', 56', 58", 118, 120, 126, 128, 130, 136, 138, 140, 218, 220, 222, 224) est associé au réseau.

15. Procédé selon la revendication 12 dans lequel le serveur de communication sans fil (50, 50', 90, 110, 122, 134, 212, 214, 216) utilise un tableau de destinations pour associer une unité distante (64, 64') à un point d'accès (52, 54, 56, 58-62, 52', 54', 56', 58", 118, 120, 126, 128, 130, 136, 138, 140, 218, 220, 222, 224).

16. Procédé selon la revendication 12 dans lequel l'étape d'envoi comporte la transposition ou l'encapsulation de trame.
